# EUROPÄISCHE PATENTSCHRIFT

(11) **EP 4 077 520 B1**
(45) Veröffentlichungstag und Bekanntmachung des Hinweises auf die Patenterteilung: **06.12.2023**
(21) Anmeldenummer: 20807781.8
(22) Anmeldetag: 20.11.2020
(51) Int. Cl.: C08K 5/1515, C08K 5/42, C08K 7/06, C08K 7/14

(54) **POLYCARBONAT-ZUSAMMENSETZUNGEN ENTHALTEND FÜLLSTOFFE UND EPOXY-GRUPPEN ENTHALTENDES TRIACYLGLYCEROL**
POLYCARBONATE COMPOSITIONS CONTAINING FILLERS AND TRIACYLGLYCEROL CONTAINING EPOXY GROUPS
COMPOSITIONS DE POLYCARBONATE CONTENANT DES CHARGES ET DU TRIACYLGLYCÉROL CONTENANT DES GROUPES ÉPOXY

(30) Priorität: 17.12.2019 EP 19216962
(43) Veröffentlichungstag der Anmeldung: 26.10.2022
(73) Patentinhaber: Covestro Intellectual Property GmbH & Co. KG, 51373 Leverkusen (DE)
(72) Erfinder: HEUER, Helmut, Werner, 57074 Siegen (DE); WEHRMANN, Rolf, 47800 Krefeld (DE); BOUMANS, Anke, 47551 Bedburg-Hau (DE)
(74) Vertreter: Levpat
(86) Internationale Anmeldenummer: PCT/EP2020/082915
(87) Internationale Veröffentlichungsnummer: WO 2021/121864

(56) Entgegenhaltungen:
- WO-A1-00/29483
- CN-A- 105 400 167
- US-A- 4 497 920

## Beschreibung

Die vorliegende Erfindung betrifft carbonfaserverstärkte Polycarbonat-haltige Zusammensetzungen mit hoher Fließfähigkeit, ausgezeichneter Steifigkeit und guten Flammschutzeigenschaften. Weiterhin betrifft die vorliegende Erfindung Formteile, etwa für Gehäuse bzw. Gehäuseteile im EE- und IT-Bereich, z.B. für Elektrogehäuse/Schaltkästen oder für Rahmen von LCD-/LED-Bildschirmen sowie für Gehäuse/Gehäuseteile von mobilen Kommunikationsendgeräten, wie Smartphones, Tablets, Ultrabooks, Notebooks oder Laptops, aber auch für Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile.

Aus dem Stand der Technik ist bekannt, Kunststoffen wie Polycarbonat Glasfasern oder Carbonfasein hinzuzufügen, welche die Steifigkeit verbessern. Weiterhin ist eine Vielzahl von Flammschutzmitteln bekannt, die für Polycarbonat geeignet sind. Mit der Optimierung der Eigenschaften eines Polycarbonats hinsichtlich Steifigkeit und Flammschutzeigenschaften ist jedoch gleichzeitig eine Verschlechterung der Fließfähigkeit verbunden, was insbesondere im Hinblick auf Dünnwandanwendungen problematisch ist.

Die WO 2013/045552 A1 beschreibt glasfasergefüllte, flammgeschützte Polycarbonate mit einem hohen Maß an Steifigkeit und gleichzeitig guter Zähigkeit. Über die Möglichkeit zur Verbesserung der Fließfähigkeit entsprechender Zusammensetzungen wird nichts gelehrt. Außerdem ist in der US 3 951 903 A der Einsatz von Carbonsäureanhydriden in glasfasergefüllten Polycarbonaten zur Verbesserung der Spannungsrissbeständigkeit beschrieben. In der EP 0 063 769 A2 wird ein Polycarbonat beschrieben, das Glasfasern und Polyanhydrid enthält und eine verbesserte Schlagzähigkeit aufweist. Eine Verbesserung der Fließfähigkeit wird nicht beschrieben.

Herkömmlich wird zur Fließverbesserung BDP (Bisphenol A-Diphosphat) verwendet, und zwar in Mengen von bis zu mehr als 10 Gew.-%, um den gewünschten Effekt zu erzielen. Durch solch hohe Mengen an BDP werden jedoch Verschlechterungen anderer Eigenschaften in Kauf genommen.

Eine Aufgabe der vorliegenden Erfindung war es, verstärkte Polycarbonat-haltige Zusammensetzungen mit einer Kombination aus guter Fließfähigkeit, aber auch hoher Steifigkeit und möglichst einer Flammwidrigkeit von UL94 V-0 bei mit 1,5 mm Wandstärke hergestellten Formteilen sowie entsprechende Formteile bereitzustellen, welche ein ausreichendes Fließverhalten bei der Verarbeitung aufweisen.

Überraschenderweise wurde gefunden, dass Glasfaser- und/oder Carbonfaser-haltige Zusammensetzungen auf Basis von Polycarbonat eine verbesserte Fließfähigkeit aufweisen und die mechanischen Eigenschaften, ermittelt anhand eines Zugversuchs, nahezu unverändert erhalten bleiben, wenn epoxidiertes Triacylglycerol, insbesondere in Form von epoxidiertem Sojabohnenöl, enthalten ist.

Epoxidiertes Sojabohnenöl wurde zwar zw. schon vorher als Additiv für Polycarbonat beschrieben, nicht jedoch im Hinblick auf eine Verbesserung der Fließfähigkeit Glasfaser- oder Carbonfaserhaltiger Zusammensetzungen. So ist in CN105400167 A beispielsweise der Zusatz geringer Mengen epoxidierten Sojabohnenöls als Teil eines komplexen Weichmachergemisches beschreiben. Weichmacher führen bekanntermaßen jedoch zu einer erheblichen Verschlechterung der mechanischen Eigenschaften einer Polycarbonat-Zusammensetzung. Die Verwendung als Weichmacher ist auch eine andere als die Verwendung zur Verbesserung der Fließfähigkeit, welche die Schmelze einer thermoplastischen Zusammensetzung betrifft.

Die Polycarbonatzusammensetzungen, enthaltend epoxidiertes Triacylglycerol, insbesondere in Form von epoxidiertem Sojabohnenöl, zeigen bevorzugt gute Schmelzestabilitäten mit verbesserten rheologischen Eigenschaften, und zwar eine höhere Schmelzevolumenfließrate (MVR), bestimmt nach DIN EN ISO 1133:2012-03 (bei einer Prüftemperatur von 300 °C, Masse 1,2 kg), geringere Scherviskositäten bei verschiedenen Temperaturen und über einen breiten Scherbereich sowie eine gute, d.h. niedrigere Schmelzeviskosität, bestimmt nach ISO 11443:2005.

Erfindungsgemäße Zusammensetzungen sind daher thermoplastische Zusammensetzungen, enthaltend
A) 50,0 Gew.-% bis 91,95 Gew.-% aromatisches Polycarbonat,
B) 8 bis 49,95 Gew.-% Carbonfasern,
C) 0,05 Gew.-% bis 10,0 Gew.-% epoxidiertes Triacylglycerol, insbesondere in die Zusammensetzung eingebracht in Form von epoxidiertem Sojabohnenöl.

Bevorzugt enthalten die Zusammensetzungen
A) 74,0 bis 91,9 Gew.-% aromatisches Polycarbonat,
B) 8 bis 25,0 Gew.-% Carbonfasern,
C) 0,1 bis 1,0 Gew.-% epoxidiertes Triacylglycerol, insbesondere in die Zusammensetzung eingebracht in Form von epoxidiertem Sojabohnenöl,
D) 0,0 Gew.-% bis 1,0 Gew.-% Thermostabilisator und
E) 0,0 Gew.-% bis 10,0 Gew.-% weitere Additive.

Besonders bevorzugt enthalten die Zusammensetzungen
A) 77,0 Gew.-% bis 91,5 Gew.-% aromatisches Polycarbonat,
B) 8 bis 22 Gew.-% Carbonfasern,
C) 0,2 bis 1,0 Gew.-%, insbesondere bis 0,8 Gew.-%, des epoxidiertes Triacylglycerols, insbesondere in die Zusammensetzung eingebracht in Form von epoxidiertem Sojabohnenöl,
D) 0,005 bis 0,5 Gew.-%, insbesondere 0,01 bis 0,2 Gew.-%, Thermostabilisator und
E) 0,0 Gew.-% bis 3 Gew.-%, insbesondere 0,1 bis 3 Gew.-% weitere Additive.

Ganz besonders bevorzugt ist als weiteres Additiv mindestens ein Alkali-, Erdalkali- und/oder Ammoniumsalz eines aliphatischen oder aromatischen Sulfonsäure-, Sulfonamid- oder Sulfonimidderivates enthalten, bevorzugt in einer Menge von 0,1 bis 0,5 Gew.-%, bezogen auf die Gesamtzusammensetzung, insbesondere ist mindestens Kaliumperfluor-1-butansulfonat enthalten.

Äußerst bevorzugt enthalten die vorbeschriebenen Zusammensetzungen keine weiteren Komponenten, sondern die Mengen der Komponenten A), B), C) - ggf. C1) - epoxidiertes Sojabohnenöl, enthaltend epoxidiertes Triacylglycerol- und ggf. D) und/oder E), insbesondere in den vorbeschriebenen bevorzugten Ausführungsformen, ergänzen sich zu 100 Gew.-%.

Im Rahmen der vorliegenden Erfindung beziehen sich die angegebenen Gew.-% der Komponenten A, B, C - bzw. C1- und ggf. D und/oder E - soweit nicht explizit anders angegeben - jeweils auf das Gesamtgewicht der Zusammensetzung. Es versteht sich, dass sämtliche in einer erfindungsgemäßen Zusammensetzung enthaltenen Komponenten zusammen 100 Gew.-% ergeben. Die Zusammensetzung kann neben den Komponenten A, B, C und D weitere Komponenten, etwa weitere Additive in Form der Komponente E, enthalten. Ebenso kann die Zusammensetzung einen oder mehrere weitere Thermoplasten als Blendpartner enthalten. Ganz besonders bevorzugt enthalten die vorbeschriebenen Zusammensetzungen keine weiteren Komponenten, sondern die Mengen der Komponenten A), B), C) (bzw. C1) und ggf. D) und/oder E), insbesondere in den vorbeschriebenen bevorzugten Ausführungsformen, ergänzen sich zu 100 Gew.-%, d.h. die Zusammensetzungen bestehen aus den Komponenten A), B), C) (ggf. C1)), ggf. D) und/oder E).

Es versteht sich, dass die eingesetzten Komponenten übliche Verunreinigungen, die beispielsweise aus ihrem Herstellungsprozess herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Die erfindungsgemäßen Zusammensetzungen werden vorzugsweise zur Herstellung von Formteilen verwendet. Die Zusammensetzungen weisen bevorzugt eine Schmelze-Volumenfließrate (MVR) von 2 bis 30 cm³/(10 min), weiter bevorzugt von 3 bis 25 cm³/(10 min), besonders bevorzugt von 4 bis 15 cm³/(10 min), ganz besonders bevorzugt von 5 bis 13 cm³/(10 min), bestimmt nach ISO 1133:2012-3 (Prüftemperatur 300°C, Masse 1,2 kg), auf.

Gegenstand der Erfindung ist auch die Verbesserung der Fließfähigkeit, ausgedrückt in einer Steigerung der Schmelzevolumenfließrate, bestimmt gemäß DIN EN ISO 1133:2012-03 bei einer Prüftemperatur von 300°C und einer Masse von 1,2 kg, und/oder eine Senkung der Schmelzeviskosität, bestimmt gemäß ISO 11443:2005, von Glasfaser- und/oder Carbonfaser-haltigen PolycarbonatZusammensetzungen, durch den Zusatz von epoxidiertem Triacylglycerol, insbesondere in Form eines epoxidierten Sojabohnenöls. Die Verbesserung der Fließfähigkeit bezieht sich auf die entsprechenden Zusammensetzungen ohne epoxidiertes Triacylglycerol, insbesondere in Form eines epoxidiertes Sojabohnenöls.

Die einzelnen Bestandteile der erfindungsgemäßen Zusammensetzungen sind im Folgenden noch näher erläutert:

### Komponente A

Unter "Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein. Erfindungsgemäß können auch Mischungen von Polycarbonaten verwendet werden.

Erfindungsgemäße Zusammensetzungen enthalten als Komponente A) 50,0 Gew.-% bis 91,95 Gew.-% aromatisches Polycarbonat. Ein Anteil von mindestens 50,0 Gew.-% aromatischem Polycarbonat an der Gesamtzusammensetzung bedeutet erfindungsgemäß, dass die Zusammensetzung auf aromatischem Polycarbonat basiert. Vorzugsweise beträgt die Menge des aromatischen Polycarbonats in der Zusammensetzung 74,0 bis 94,0 Gew.-%, weiter bevorzugt 77,0 bis 91,5 Gew.-%, noch weiter bevorzugt 78,0 bis 90,0 Gew.-%, wobei ein einzelnes Polycarbonat oder eine Mischung mehrerer Polycarbonate vorliegen kann.

Sofern eine Mischung von Polycarbonaten verwendet wird, enthält diese bevorzugt 65 bis 85 Gew.-%, weiter bevorzugt 70 bis 80 Gew.-%, aromatisches Polycarbonat mit einer MVR von 5,0 bis 20 cm³/(10 min), weiter bevorzugt 5,5 bis 11 cm³/(10 min), noch weiter bevorzugt 6,0 bis 10 cm³/(10 min), bestimmt gemäß ISO 1133:2012-03 bestimmt bei einer Prüftemperatur von 300°C und 1,2 kg Belastung, sowie 5 bis 15 Gew.-%, bevorzugt 7 bis 13 Gew.-%, weiter bevorzugt 8 bis 12 Gew.-% aromatisches Polycarbonat mit einer MVR von 4 bis < 8,0 cm³/(10 min), bevorzugt von 5 bis 7 cm³/(10 min), bestimmt gemäß ISO 1133:2012-03 bei einer Prüftemperatur von 300°C und 1,2 kg Belastung. Von dem aromatischen Polycarbonat mit einer MVR von 4 bis < 8,0 cm³/(10 min), bevorzugt von 5 bis 7 cm³/(10 min), bestimmt gemäß ISO 1133:2012-03 bei einer Prüftemperatur von 300°C und 1,2 kg Belastung, werden besonders bevorzugt 50 bis 75 Gew.-%, weiter bevorzugt 55 bis 70 Gew.-%, bezogen auf die Gesamtmenge an aromatischem Polycarbonat mit einer MVR von 4 bis < 8,0 cm³/(10 min), bevorzugt von 5 bis 7 cm³/(10 min), in Pulverform eingesetzt.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 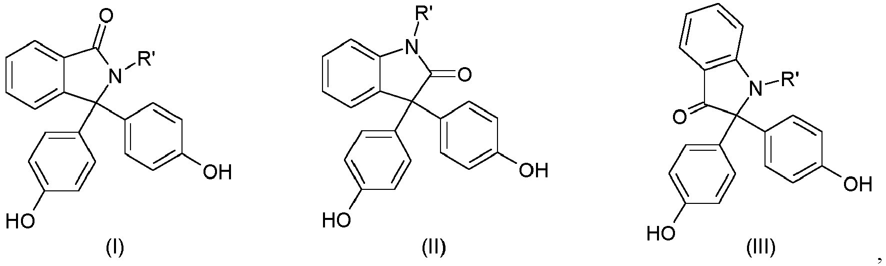 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 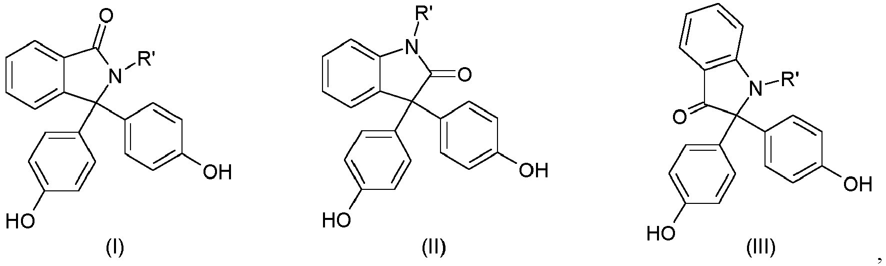 in denen R' jeweils für C₁- bis C₄-Alkyl, Aralkyl oder Aryl, bevorzugt für Methyl oder Phenyl, ganz besonders bevorzugt für Methyl, steht, abgeleitete Homo- oder Copolycarbonate.

Zur Einarbeitung von Additiven wird die Komponente A bevorzugt in Form von Pulvern, Granulaten oder von Gemischen aus Pulvern und Granulaten eingesetzt.

### Komponente B

Erfindungsgemäße Zusammensetzungen enthalten 8 bis 49,95 Gew.-%, bevorzugt 8 bis 35,0 Gew.-%, weiter bevorzugt 8 bis 25 Gew.-%, noch weiter bevorzugt 8 bis 22 Gew.-%, besonders bevorzugt 10 bis 20 Gew.-% Carbonfasern. Bezüglich der erfindungsgemäßen Verwendung gelten diese Mengenbereiche für Carbonfasern und/oder Glasfasern in einer Zusammensetzung. Carbonfasern werden industriell üblicherweise aus Vorstufen wie z. B. Polyacrylfasern durch Pyrolyse (Carbonisierung) gewonnen.

In den erfindungsgemäßen Zusammensetzungen können Langfasern und Kurzfasern verwendet werden. Bevorzugt werden Kurzfasern eingesetzt.

Die Länge der geschnittenen Fasern liegt bevorzugt zwischen 3 mm und 125 mm. Besonders bevorzugt werden Fasern der Länge 3 mm bis 25 mm eingesetzt.

Neben Fasern mit rundem Querschnitt sind auch Fasern mit kubischer Dimension (plättchenförmig) einsetzbar.

Neben den geschnittenen Fasern werden alternativ bevorzugt gemahlene Carbonfasern eingesetzt. Bevorzugte gemahlene Carbonfasern weisen Längen von 50 µm bis 150 µm auf.

Die Carbonfasern sind gegebenenfalls mit organischen Schlichten gecoatet, um besondere Anbindungen an die Polymermatrix zu ermöglichen. Die bevorzugten Schlichten entsprechen den für Glasfasern genannten.

Kurzschnittfasern und gemahlene Carbonfasern werden den polymeren Basismaterialien üblicherweise durch Compoundierung zugesetzt.

Für Langfäden wird üblicherweise mit Hilfe spezieller technischer Verfahren Kohlenstoff in feinsten Fäden angeordnet. Diese Filamente besitzen üblicherweise einen Durchmesser von 3 bis 10 µm. Aus den Filamenten können auch Rovings, Gewebe, Vliese, Bänder, Schläuche oder Ähnliches hergestellt werden.

Es sind bevorzugt 10 bis 30 Gew.-%, weiter bevorzugt 11 bis 25 Gew.-%, noch weiter bevorzugt 12 bis 22 Gew.-%, insbesondere bis 20 Gew.-% Carbonfasern enthalten.

In Zusammenhang mit der erfindungsgemäßen Verwendung sind auch Glasfasern zu berücksichtigen.

Die Glasfasern basieren üblicherweise auf einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glasfasern können in Form von Schnittglasfasern, sowohl Langfasern als auch Kurzfasern, Mahlfasern, Glasfasergeweben oder Mischungen der vorgenannten Formen eingesetzt werden, wobei die Schnittglasfasern sowie die Mahlfasern bevorzugt eingesetzt werden.

Besonders bevorzugt werden Schnittglasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser eingesetzter Rundfasern vor der Compoundierung beträgt bevorzugt 5 bis 25 µm, weiter bevorzugt 6 bis 20 µm, besonders bevorzugt 7 bis 17 µm, bestimmt mittels lichtmikroskopischer Analyse.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf.

Bevorzugte Flach- und Ovalglasfasern weisen eine durchschnittliche Faserhöhe von 4 µm bis 17 µm, weiter bevorzugt von 6 µm bis 12 µm und besonders bevorzugt 6 µm bis 8 µm sowie eine durchschnittliche Faserbreite von 12 µm bis 30 µm, weiter bevorzugt 14 µm bis 28 µm und besonders bevorzugt 16 µm bis 26 µm auf. Die Faserabmessungen sind bevorzugt mittels lichtmikroskopischer Analyse bestimmt.

Die Glasfasern sind bevorzugt mit einer Glasschlichte an der Oberfläche der Glasfaser modifiziert. Bevorzugte Glasschlichten umfassen Epoxy-modifizierte, Polyurethan-modifizierte und nichtmodifizierte Silanverbindungen sowie Mischungen der vorgenannten Silanverbindungen.

Die Glasfasern können auch nicht mit einer Glasschlichte modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist. Sowohl für eine starke Anbindung an die Polymermatrix als auch bei einer nicht-anbindenden Faser zeigt sich eine Verbesserung der erfindungsgemäßen Eigenschaften der Zusammensetzungen.

Eine Anbindung der Glasfasern an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

Sofern Glasfasern in der Zusammensetzung enthalten sind, sind besonders bevorzugt 10 bis 20 Gew.-% Glasfasern in der Zusammensetzung enthalten.

### Komponente C

Die erfindungsgemäßen Zusammensetzungen enthalten als Komponente C epoxidiertes Triacylglycerol. Es kann sich bei Komponente C um ein bestimmtes oder eine Mischung verschiedener Epoxygruppen-enthaltender ("epoxidierter") Triacylglycerole handeln. Bevorzugt handelt es sich um eine Mischung verschiedener Triacylglycerole. Bevorzugt enthält Komponente C eine Mischung von Triestern aus Glycerin mit Ölsäure, Linolsäure, Linolensäure, Palmitinsäure und/oder Stearinsäure. Weiter bevorzugt umfassen die Ester gemäß Komponente C nur Ester aus Glycerin mit den genannten Fettsäuren. Besonders bevorzugt wird Komponente C in Form von epoxidiertem Sojabohnenöl (C1) in die erfindungsgemäßen Zusammensetzungen eingebracht. Die CAS-Nummer von epoxidiertem Sojabohnenöl lautet 8013-07-8.

Die Epoxy-Gruppen in Komponente C können in dem Fachmann geläufigen Verfahren eingeführt werden. Solche sind insbesondere die Epoxidierung mit Peroxiden oder Persäuren, d.h. Ester von Glycerin mit Doppelbindungen enthaltenden Carbonsäuren werden mit Peroxiden oder Persäuren umgesetzt. Die C=C-Doppelbindungen in den Triacylglycerolen reagieren dabei teilweise oder vollständig zu Epoxidgruppen. Die Triacylglycerole sind also teilweise oder vollständig epoxidiert. Bevorzugt sind mindestens 90 %, weiter bevorzugt mindestens 95 %, noch weiter bevorzugt mindestens 98 % der aus den ungesättigten Carbonsäuren stammenden C=C-Doppelbindungen der Triacylglycerole epoxidiert. Bei Komponente C handelt es sich bevorzugt um eine Mischung verschiedener Verbindungen, wie sie z.B. durch den Einsatz von epoxidiertem Sojabohnenöl gegeben ist. Die OH-Zahlen dieser Mischungen liegen vorzugsweise zwischen 180 und 300 mg KOH/g (Methode 2011-0232602-92D der Currenta GmbH & Co. OHG, Leverkusen, entsprechend DIN EN ISO2554:1998-10 mit Pyridin als Lösungsmittel). Die Säurezahlen dieser Mischungen liegen vorzugsweise unter 1 mg KOH/g, weiter bevorzugt sind sie ≤ 0,5 mg KOH/g, bestimmt mittels DIN EN ISO 2114:2006-11. Die Jodzahl der Mischungen nach Wijs beträgt vorzugsweise ≤ 5,0 g Jod/100 g, weiter bevorzugt ≤ 3,0 g Jod/100 g (Methode 2201-0152902-95D der Currenta GmbH & Co. OHG, Leverkusen). Die Oxiranzahl beträgt bevorzugt 5 bis 10 g O₂/100 g, besonders bevorzugt 6,3 bis 8,0 g O₂/100 g.

Die Polycarbonat-haltigen Zusammensetzungen enthalten 0,05 bis 10,0 Gew.-%, bevorzugt 0,1 bis 8,0 Gew.-%, weiter bevorzugt 0,2 bis 6,0 Gew.-%, noch weiter bevorzugt 0,2 bis 1,0 Gew.-%, besonders bevorzugt bis 0,8 Gew.-%, der Komponente C.

### Komponente D

Die erfindungsgemäßen Zusammensetzungen können weiterhin Thermostabilisatoren D) enthalten. Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite.

Als Thermostabilisatoren werden bevorzugt Phosphor-Verbindungen mit der Oxidationszahl +III, insbesondere Phosphine und/oder Phosphite, eingesetzt.

Als Thermostabilisatoren eignen sich besonders bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36).

Sie werden allein oder im Gemisch (z. B. Irganox^{®} B900 (Gemisch aus Irgafos^{®} 168 und Irganox^{®} 1076 im Verhältnis 4:1) oder Doverphos^{®} S-9228 mit Irganox^{®} B900 bzw. Irganox^{®} 1076) eingesetzt.

Die Thermostabilisatoren werden bevorzugt in Mengen bis zu 1,0 Gew.-%, weiter bevorzugt 0,003 bis 1,0 Gew.-%, noch weiter bevorzugt 0,005 bis 0,5 Gew.-%, besonders bevorzugt 0,01 bis 0,2 Gew.-% eingesetzt.

### Komponente E

Zusätzlich sind optional bis zu 10,0 Gew.-%, bevorzugt 0,1 bis 6,0 Gew.-%, besonders bevorzugt 0,1 bis 3,0 Gew.-%, ganz besonders bevorzugt 0,2 bis 1,0 Gew.-%, insbesondere bis 0,5 Gew.-% sonstige übliche Additive ("weitere Additive") enthalten. Die Gruppe der weiteren Additive umfasst keine Thermostabilisatoren, da diese bereits als Komponente D beschrieben sind. Es versteht sich, dass Komponente E auch keine Carbonfasern und auch kein Epoxy-Gruppen enthaltendes Triacylglycerol, auch kein epoxidiertes Sojabohnenöl umfasst, da diese bereits als Komponenten B und C bzw. C1 beschrieben sind.

Solche Additive, wie sie üblicherweise bei Polycarbonaten zugesetzt werden, sind insbesondere Antioxidantien, Entformungsmittel, Flammschutzmittel, UV-Absorber, IR-Absorber, Schlagzähmodifikatoren, Antistatika, optische Aufheller, von Komponente B verschiedene Füllstoffe, Lichtstreumittel, Farbmittel wie organische Pigmente, anorganische Pigmente wie z. B. Talk, Silikate oder Quarz und/oder Additive zur Lasermarkierung, wie sie beispielsweise in EP-A 0 839 623, WO-A 96/15102, EP-A 0 500 496 oder "Plastics Additives Handbook", Hans Zweifel, 5th Edition 2000, Hanser Verlag, München beschrieben sind, in den für Polycarbonat üblichen Mengen. Diese Additive können einzeln oder auch im Gemisch zugesetzt werden.

Bevorzugte Additive sind Flammschutzmittel, insbesondere Alkali-, Erdalkali- und/oder Ammoniumsalze von aliphatischen bzw. aromatischen Sulfonsäure-, Sulfonamid- und Sulfonimidderivaten. Besonders bevorzugt umfassen erfindungsgemäße Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet^{®} C4 von der Firma Lanxess, Leverkusen, Deutschland.

Die Mengen von Alkali-, Erdalkali- und/oder Ammoniumsalze von aliphatischen bzw. aromatischen Sulfonsäure-, Sulfonamid- und Sulfonimidderivaten in der Zusammensetzung, sofern diese eingesetzt werden, betragen bevorzugt insgesamt 0,1 bis 0,5 Gew.-%, weiter bevorzugt 0,12 bis 0,3 Gew.-%, besonders bevorzugt 0,15 bis 0,2 Gew.-%.

Weitere bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul^{®} 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylen-dimethyliden)-bismalonat (Hostavin^{®} B-Cap, Clariant AG) oder N-(2-Ethoxyphenyl)-N'-(2-ethylphenyl)-ethandiamid (Tinuvin^{®} 312, CAS-Nr. 23949-66-8, BASF SE, Ludwigshafen).

Besonders bevorzugte spezielle UV-Stabilisatoren sind Tinuvin^{®} 360, Tinuvin^{®} 329, Tinuvin 326, Tinuvin 1600 und/oder Tinuvin^{®} 312, ganz besonders bevorzugt sind Tinuvin^{®} 329 und Tinuvin^{®} 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Die erfindungsgemäßen Zusammensetzungen können auch Phosphate oder Sulfonsäureester als Umesterungsstabilisatoren enthalten. Bevorzugt ist Triisooctylphosphat als Umesterungsstabilisator enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Die Zusammensetzung kann frei von Pentaerythrittetrastearat und Glycerinmonostearat sein, insbesondere frei von üblicherweise für Polycarbonat eingesetzten Entformungsmitteln, weitergehend frei von jeglichen Entformungsmitteln. Besonders bevorzugt ist mindestens ein Thermostabilisator (Komponente D) und als weiteres Additiv (Komponente E) ein Flammschutzmittel aus der Gruppe der Alkali-, Erdalkali- und/oder Ammoniumsalze von aliphatischen bzw. aromatischen Sulfonsäure-, Sulfonamid- und Sulfonimidderivaten, sowie ggf. ein Umesterungsstabilisator, insbesondere Triisooctylphosphat, oder ein UV-Absorber enthalten.

Als Additiv (Komponente E) kann in erfindungsgemäßen Zusammensetzungen auch ein Schlagzähmodifikator enthalten sein. Beispiele für Schlagzähmodifikatoren sind: Acrylat-core-shell-Systeme oder Butadienkautschuke (Paraloid-Typen von DOW Chemical Company); Olefin-Acrylat-Copolymere wie z. B. Elvaloy^{®}-Typen von DuPont; Siliconacrylatkautschuke wie z. B. die Metablen^{®}-Typen von Mitsubishi Rayon Co., Ltd.

Es versteht sich, dass die erfindungsgemäßen thermoplastischen Zusammensetzungen grundsätzlich auch Blendpartner enthalten können. Als Blendpartner geeignete thermoplastische Polymere sind beispielsweise Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylatem, Poly- oder Copolymethacrylat wie z.B. Poly- oder Copolymethylmethacrylate (wie PMMA), sowie Copolymere mit Styrol wie z.B. transparentes Polystyrolacrylnitril (PSAN), thermoplastische Polyurethane und/oder Polymere auf Basis von zyklischen Olefinen (z.B. TOPAS^{®}, ein Handelsprodukt der Firma Ticona).

Die Herstellung der erfindungsgemäßen Zusammensetzungen, enthaltend die Komponenten A bis C (bzw. C1) sowie ggf. D und/oder E sowie ggf. Blendpartner, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B, C und ggf. D und E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Herstellung der Formteile erfolgt vorzugsweise durch Spritzguss, Extrusion oder aus Lösung in einem Gießprozess.

Beispielsweise weisen die erfindungsgemäßen Zusammensetzungen wenigstens eine der nachfolgenden Eigenschaften auf:
- eine Reißdehnung nach DIN EN ISO 527-1/-2:1996 von ≥ 1% bis ≤ 5%
- eine Streckspannung nach DIN EN ISO 527-1/-2:1996 von ≥ 58 N/mm², bevorzugt ≥ 60 N/mm² bis ≤ 150 N/mm²
- eine Streckdehnung nach DIN EN ISO 527-1/-2:1996 von ≥ 1% bis ≤ 5%
- ein Elastizitätsmodul nach DIN EN ISO 527-1/-2:1996 von ≥ 3500 N/mm² bis ≤ 20000 N/mm²
- eine Einstufung im Brandtest UL94 (1,5 mm Wandstärke) von V0.

Die erfindungsgemäßen Zusammensetzungen sind zur Herstellung von Mehrschichtsystemen geeignet. Hierbei wird die Polycarbonat-haltige Zusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die erfindungsgemäßen Zusammensetzungen sind zur Herstellung von Bauteilen im Automotive-Bereich, etwa für Blenden, Scheinwerferabdeckungen oder -rahmen, Linsen und Kollimatoren oder Lichtleiter sowie zur Herstellung von Rahmenbauteilen im EE (Elektro/Elektronik)- und IT-Bereich geeignet, insbesondere für Anwendungen, die hohe Anforderungen an die Fließfähigkeit stellen (Dünnschichtanwendungen). Solche Anwendungen sind beispielsweise Gehäuse, etwa für Ultrabooks, oder Rahmen/Rahmenteile für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Gehäuseteile für Navigationsgeräte, Smartwatches oder Herzfrequenzmesser, sowie für Elektroanwendungen in Dünnwand-Ausfertigungen, z. B. Haus- und Industrie-Vernetzungseinheiten und Smart-Meter-Gehäusebauteile.

Die erfindungsgemäßen Zusammensetzungen zeichnen sich insbesondere dadurch aus, dass sie aufgrund der Anwesenheit von Komponente C über ausgezeichnete rheologische und optische Eigenschaften verfügen. Sie eignen sich daher insbesondere für die Herstellung von anspruchsvollen Spritzgussteilen, besonders für Dünnwandanwendungen, bei denen eine gute Fließfähigkeit erforderlich ist. Beispiele für derartige Anwendungen sind Ultrabook-Gehäuseteile, Laptop-Cover, Scheinwerferabdeckungen, LED-Anwendungen oder Bauteile für E/E-Anwendungen. Dünnwandanwendungen sind bevorzugt solche Anwendungen, bei denen Wandstärken von weniger als 3 mm, weiter bevorzugt von weniger als 2,5 mm, noch weiter bevorzugt weniger als 2,0 mm, ganz besonders bevorzugt von weniger als 1,5 mm vorliegen. Wandstärke in diesem konkreten Fall ist definiert als Dicke der Wand lotrecht zur Fläche des Formteils mit der größten Ausdehnung, wobei über mindestens 60 %, bevorzugt über mindestens 75 %, weiter bevorzugt über mindestens 90 %, besonders bevorzugt über die gesamte Fläche die genannte Dicke vorliegt.

Die Formteile, bestehend aus den erfindungsgemäßen Zusammensetzungen oder umfassend diese, einschließlich der Formteile, die eine Schicht eines Mehrschichtsystems bzw. ein Element eines oben genannten Bauteils darstellen, aus ("bestehend aus") diesen erfindungsgemäßen Zusammensetzungen, sind ebenfalls Gegenstand dieser Anmeldung.

Die für die erfindungsgemäßen Zusammensetzungen vorstehend beschriebenen Ausführungsformen gelten - soweit anwendbar - auch für die erfindungsgemäße Verwendung.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 °C.

**Komponente A-1:** Lineares Polycarbonat auf Basis von Bisphenol A mit einer Schmelze-Volumenfließrate MVR von 9,5 cm³/(10 min) (gemäß ISO 1133:2012-03, bei einer Prüftemperatur 300°C und 1,2 kg Belastung).

**Komponente A-2:** Lineares Polycarbonat auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung).

Die Komponenten A-1 und A-2 enthalten jeweils 250 ppm Triphenylphosphin der Firma BASF SE als **Komponente D.**

**Komponente A-3:** Lineares Polycarbonat in Pulverform auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung).

**Komponente B-1**: CS108F-14P, geschnittene Kurzglasfasern (nicht anbindend) der Firma 3B mit einem durchschnittlichen Faserdurchmesser von 14 µm und einer durchschnittlichen Faserlänge von 4,0 mm vor der Compoundierung, wobei die Faserabmessungen dieser und der folgenden Komponenten mittels Lichtmikroskopie bestimmt sind.

**Komponente B-2**: CS 7942, geschnittene Kurzglasfasern (anbindend) der Firma Lanxess Deutschland GmbH mit einem durchschnittlichen Faserdurchmesser von 14 µm und einer durchschnittlichen Faserlänge von 4,5 mm vor der Compoundierung.

**Komponente B-3**: Carbonfasern CF Tenax HT 493, geschnittene Kohlenstoff-Kurzfasern der Firma Toho Tenax Europe GmbH Germany mit thermoplastischem Präparationsauftrag und mit einer durchschnittlichen Schnittlänge von 6 mm vor der Compoundierung.

**Komponente B-4**: Carbonfasern CF Tairyfil CS2516, geschnittene Kohlenstoff-Kurzfasern der Firma Dow Aksa (Türkei) mit einer durchschnittlichen Länge von 6 mm vor der Compoundierung.

**Komponente B-5**: Carbonfasern CF Aksaka AC3101, geschnittene Kohlenstoff-Kurzfasern der Firma Dow Aksa (Türkei) mit einer durchschnittlichen Länge von 6 mm vor der Compoundierung.

**Komponente C:** Epoxidiertes Sojabohnenöl ("Sojaöl D65") der Firma Avokal GmbH, Wuppertal, mit einer Säurezahl ≤ 0,5 mg KOH/g, bestimmt mittels DIN EN ISO 2114:2006-11, einem Oxiranwert (Epoxid-Sauerstoff ES, berechnet aus der Epoxid-Zahl EEW, gibt an wieviel Gramm Sauerstoff pro 100 g Öl enthalten sind; EEW bestimmt nach DIN 16945: 1987-09) von ≥ 6,3 g O₂/100 g. Überwiegend vollständig epoxidierte Triacylglycerole, welche eine Mischung aus Triestern aus Glycerin mit Ölsäure, Linolsäure, Linolensäure, Palmitinsäure und/oder Stearinsäure sind.

**Komponente E:** Kaliumperfluor-1-butansulfonat, kommerziell erhältlich als Bayowet^{®} C4 der Firma Lanxess AG, Leverkusen, Deutschland, CAS-Nr. 29420-49-3.

Die Bestimmung des **Schmelze-Volumenfließrate** (MVR) erfolgte nach ISO 1133:2012-03 (überwiegend bei einer Prüftemperatur von 300 °C, Masse 1,2 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischem Stress.

Die Bestimmung der **Scherviskosität (Schmelzeviskosität)** erfolgte gemäß ISO 11443:2005 mit dem Gerät Visco-Robo 45.00 der Fa. Göttfert.

Die Bestimmung der **Lösungsviskosität eta rel** erfolgte nach ISO 1628-4:1999-03 mit einem Ubbelohde-Viskosimeter. Dazu wurden die Granulate gelöst und die Füllstoffe durch Filtration abgetrennt. Das Filtrat wurde eingeengt und getrocknet. Der erhaltene Film wurde zur Messung der Lösungsviskosität verwendet.

Das **Zug-E-Modul** ("E-Modul") wurde gemäß ISO 527-1/-2:1996-04 an einseitig angespritzten Schulterstäben mit einem Kern der Dimension 80 mm x 10 mm x 4 mm gemessen

Die **Reißdehnung** sowie **Streckspannung, Streckdehnung, Zugfestigkeit, Bruchspannung, Bruchdehnung, nominelle Bruchdehnung** wurden mittels Zugversuch gemäß DIN EN ISO 527-1/-2:1996 bestimmt.

Es wurde außerdem die Brennbarkeit der untersuchten Proben beurteilt und klassifiziert, und zwar nach UL94. Dazu wurden Probenkörper der Abmessung 125 mm x 13 mm x d(mm) herstellt, wobei die Dicke d dabei der kleinsten Wandstärke in der vorgesehenen Anwendung entspricht. Eine V0-Klassifizierung bedeutet, dass die Flamme nach maximal 10 s von selbst erlischt. Ein brennendes Abtropfen tritt nicht auf. Ein Nachglimmen nach der zweiten Beflammung erfolgt für maximal 30 s.

Die Musterplatten wurden jeweils durch Spritzguss bei den in den nachfolgenden Tabellen angegebenen Massetemperaturen hergestellt.

### 2. Zusammensetzungen

**Tabelle 1: Glasfasern enthaltende Compounds**

| **Rezeptur** | | **V1** | **1** | **2** | **3** | **4** | **V2** | **5** | **6** | **7** | **8** |
|---|---|---|---|---|---|---|---|---|---|---|---|
| **A-1** | Gew.-% | 79,35 | 79,35 | 79,35 | 79,35 | 79,35 | 70 | 70 | 70 | 70 | 70 |
| **A-2** | Gew.-% | 3,65 | 3,65 | 3,65 | 3,65 | 3,65 | 3,00 | 3,00 | 3,00 | 3,00 | 3,00 |
| **A-3** | Gew.-% | 6,8 | 6,6 | 6,4 | 6,2 | 6 | 6,84 | 6,64 | 6,44 | 6,24 | 6,04 |
| **B-1** | Gew.-% | 10 | 10 | 10 | 10 | 10 | - | - | - | - | - |
| **B-2** | Gew.-% | - | - | - | - | - | 20 | 20 | 20 | 20 | 20 |
| **C** | Gew.-% | - | 0,2 | 0,4 | 0,6 | 0,8 | - | 0,2 | 0,4 | 0,6 | 0,8 |
| **E** | Gew.-% | 0,2 | 0,2 | 0,2 | 0,2 | 0,2 | 0,16 | 0,16 | 0,16 | 0,16 | 0,16 |

| **Prüfungen:** | | | | | | | | | | | |
|---|---|---|---|---|---|---|---|---|---|---|---|
| **ηᵣₑₗ Granulat (vom Film)** | | 1,284 | 1,279 | 1,279 | 1,278 | 1,275 | 1,277 | 1,273 | 1,275 | 1,269 | 1,270 |
| **MVR** | cm³/(10 min) | 6,4 | 8,4 | 10,0 | 11,2 | 12,4 | 6,1 | 7,3 | 8,4 | 9,2 | 9,7 |
| **IMVR20'** | cm³/(10 min) | 6,6 | 9,7 | 12,6 | 14,8 | 17,1 | 6,5 | 7,9 | 9,4 | 10,8 | 12,2 |
| **Delta MVR/IMVR20'** | | 0,2 | 1,3 | 2,6 | 3,6 | 4,7 | 0,4 | 0,6 | 1,0 | 1,6 | 2,5 |

| **Schmelzevisk. bei 280°C** | | | | | | | | | | | |
|---|---|---|---|---|---|---|---|---|---|---|---|
| **eta 50** | Pa·s | 1166 | 1032 | 972 | 911 | 767 | 1126 | 1172 | 1247 | 1040 | 1098 |
| **eta 100** | Pa·s | 967 | 906 | 832 | 776 | 648 | 932 | 902 | 935 | 796 | 815 |
| **eta 200** | Pa·s | 787 | 774 | 695 | 661 | 558 | 777 | 714 | 728 | 616 | 632 |
| **eta 500** | Pa·s | 585 | 581 | 501 | 486 | 417 | 575 | 535 | 555 | 461 | 475 |
| **eta 1000** | Pa·s | 440 | 440 | 376 | 356 | 321 | 432 | 397 | 413 | 349 | 364 |
| **eta 1500** | Pa·s | 354 | 357 | 307 | 300 | 270 | 352 | 326 | 334 | 288 | 300 |
| **eta 5000** | Pa·s | 167 | 166 | 149 | 145 | 135 | 182 | 153 | 156 | 142 | 158 |

| **Schmelzevisk. bei 300°C** | | | | | | | | | | | |
|---|---|---|---|---|---|---|---|---|---|---|---|
| **eta 50** | Pa·s | 753 | 537 | 537 | 469 | 380 | 646 | 468 | 603 | 399 | 506 |
| **eta 100** | Pa·s | 628 | 471 | 491 | 414 | 339 | 550 | 417 | 468 | 341 | 407 |
| **eta 200** | Pa·s | 532 | 424 | 427 | 355 | 303 | 454 | 347 | 371 | 288 | 343 |
| **eta 500** | Pa s | 416 | 331 | 347 | 279 | 232 | 338 | 270 | 290 | 217 | 265 |
| **eta 1000** | Pa·s | 335 | 268 | 276 | 229 | 199 | 274 | 216 | 228 | 178 | 218 |
| **eta 1500** | Pa·s | 271 | 228 | 240 | 198 | 169 | 233 | 188 | 197 | 157 | 187 |
| **eta 5000** | Pa·s | 130 | 120 | 116 | 107 | 92 | 121 | 106 | 109 | 93 | 106 |

| **Schmelzevisk. bei 320°C** | | | | | | | | | | | |
|---|---|---|---|---|---|---|---|---|---|---|---|
| **eta 50** | Pa·s | 501 | 331 | 331 | 339 | 234 | 339 | 302 | 263 | 240 | 269 |
| **eta 100** | Pa·s | 447 | 297 | 288 | 295 | 213 | 298 | 275 | 229 | 219 | 204 |
| **eta 200** | Pa·s | 380 | 252 | 251 | 247 | 186 | 253 | 242 | 204 | 188 | 171 |
| **eta 500** | Pa·s | 293 | 204 | 207 | 195 | 150 | 196 | 190 | 178 | 152 | 138 |
| **eta 1000** | Pa·s | 230 | 172 | 170 | 154 | 125 | 158 | 149 | 156 | 122 | 111 |
| **eta 1500** | Pa·s | 198 | 152 | 150 | 132 | 111 | 141 | 133 | 141 | 104 | 103 |
| **eta 5000** | Pa·s | 108 | 87 | 89 | 76 | 69 | 79 | 79 | 83 | 66 | 65 |

| **Zugversuch** | | | | | | | | | | | |
|---|---|---|---|---|---|---|---|---|---|---|---|
| **Streckspannung** | N/mm² | 63 | 63 | 64 | 65 | 66 | - | 100 | 98 | 103 | 102 |
| **Streckdehnung** | % | 5,1 | 5 | 5,1 | 5 | 4,9 | - | 3,2 | 3,3 | 3,2 | 3,3 |
| **Zugfestigkeit** | N/mm² | 46 | 45 | 47 | 47 | 47 | 95 | 99 | 98 | 102 | 101 |
| **Reißdehnung** | % | 17 | 14 | 17 | 14 | 14 | 3 | 3,2 | 3,5 | 3,4 | 3,4 |
| **E-Modul** | N/mm² | 3630 | 3713 | 3710 | 3867 | 3893 | 5615 | 5611 | 5330 | 5685 | 5629 |

| **UL94V in 1,5 mm** | | | | | | | | | | | |
|---|---|---|---|---|---|---|---|---|---|---|---|
| **(48h, 23°C)** | | V0 | V0 | V0 | V0 | V0 | V0 | V0 | V0 | V0 | V0 |
| **(7d, 70°C)** | | V2 | V0 | V0 | V0 | V0 | V0 | V0 | V0 | V0 | V0 |
| **Gesamtbewertung** | | V2 | V0 | V0 | V0 | V0 | V0 | V0 | V0 | V0 | V0 |

| **UL94 5V** | | | | | | | | | | | |
|---|---|---|---|---|---|---|---|---|---|---|---|
| **Gesamtbeurteilung UL94 5V** | | 94-5VA | 94-5VA | 94-5VA | 94-5VB | 94-5VB | 94-5VA | 94-5VA | 94-5VA | 94-5VA | 94-5VA |

Die Vergleichsbeispiele V1 und V2, welche die Komponente C nicht enthalten, haben eine deutlich geringere Fließfähigkeit als die Beispiele 1 bis 4 bzw. 5 bis 8. Dies zeigt sich sowohl in den MVR-Werten als auch bei den Scherviskositäten bei unterschiedlichen Messtemperaturen und unterschiedlichen Scherraten.

Die sehr guten Flammschutzeigenschaften sowie die guten mechanischen Eigenschaften, ermittelt mittels Zugversuch, bleiben erhalten. Die Fließfähigkeit der geschmolzenen Zusammensetzungen nimmt mit steigendem Anteil an Komponente C zu. Analoges lässt sich auch zu den nachfolgenden Versuchsreihen feststellen, wobei die Zusammensetzungen ab Tabelle 5 Flammschutzmittel-frei sind.

**Tabelle 2: Carbonfasern enthaltende Compounds**

| **Rezeptur** | | **V3** | **9** | **10** | **V4** | **11** | **12** |
|---|---|---|---|---|---|---|---|
| **A-1** | Gew.-% | 79,3 5 | 79,35 | 79,35 | 70 | 70 | 70 |
| **A-2** | Gew.-% | 3,65 | 3,65 | 3,65 | 3,00 | 3,00 | 3,00 |
| **A-3** | Gew.-% | 6,8 | 6,6 | 6,4 | 6,84 | 6,64 | 6,44 |
| **B-3** | Gew.-% | 10 | 10 | 10 | 20 | 20 | 20 |
| **C** | Gew.-% | - | 0,2 | 0,4 | - | 0,2 | 0,4 |
| **E** | Gew.-% | 0,2 | 0,2 | 0,2 | 0,16 | 0,16 | 0,16 |

| **Prüfungen:** | | | | | | | |
|---|---|---|---|---|---|---|---|
| **ηᵣₑₗ Granulat (vom Film)** | | 1,26 8 | 1,267 | 1,270 | 1,253 | 1,248 | 1,246 |
| **MVR** | cm³/(10 min) | 6,0 | 7,4 | 8,1 | 7,7 | 8,4 | 10,6 |
| **IMVR20'** | cm³/(10 min) | 8,5 | 11,8 | 9,9 | 7,0 | 9,1 | 11,2 |
| **Delta MVR/IMVR20'** | | 2,5 | 4,4 | 1,8 | -0,7 | 0,7 | 0,6 |

| **Schmelzevisk. bei 280°C** | | | | | | | |
|---|---|---|---|---|---|---|---|
| **eta 50** | Pa·s | 1081 | 955 | 758 | 1011 | 941 | 912 |
| **eta 100** | Pa·s | 941 | 849 | 723 | 870 | 828 | 786 |
| **eta 200** | Pa·s | 811 | 726 | 649 | 748 | 705 | 674 |
| **eta 500** | Pa·s | 612 | 549 | 504 | 562 | 531 | 501 |
| **eta 1000** | Pa·s | 467 | 422 | 394 | 427 | 399 | 376 |
| **eta 1500** | Pa·s | 378 | 349 | 329 | 352 | 332 | 313 |
| **eta 5000** | Pa·s | 225 | 162 | 200 | 167 | 155 | 152 |

| **Schmelzevisk. bei 300°C** | | | | | | | |
|---|---|---|---|---|---|---|---|
| **eta 50** | Pa·s | 604 | 562 | 501 | 547 | 505 | 365 |
| **eta 100** | Pa·s | 533 | 457 | 456 | 470 | 470 | 337 |
| **eta 200** | Pa·s | 474 | 380 | 400 | 400 | 404 | 298 |
| **eta 500** | Pa·s | 364 | 279 | 314 | 316 | 321 | 243 |
| **eta 1000** | Pa·s | 287 | 230 | 250 | 252 | 253 | 202 |
| **eta 1500** | Pa·s | 247 | 196 | 213 | 213 | 213 | 177 |
| **eta 5000** | Pa·s | 129 | 107 | 118 | 118 | 118 | 102 |

| **Schmelzevisk. bei 320°C** | | | | | | | |
|---|---|---|---|---|---|---|---|
| **eta 50** | Pa·s | 365 | 337 | 295 | 337 | 295 | 154 |
| **eta 100** | Pa·s | 313 | 288 | 246 | 295 | 274 | 133 |
| **eta 200** | Pa·s | 277 | 253 | 225 | 253 | 239 | 130 |
| **eta 500** | Pa·s | 230 | 202 | 178 | 204 | 192 | 115 |
| **eta 1000** | Pa·s | 188 | 166 | 151 | 169 | 166 | 104 |
| **eta 1500** | Pa·s | 163 | 143 | 133 | 148 | 145 | 95 |
| **eta 5000** | Pa·s | 98 | 86 | 80 | 88 | 84 | 65 |

| **Zugversuch** | | | | | | | |
|---|---|---|---|---|---|---|---|
| **Reißfestigkeit** | N/mm² | 112 | 116 | 116 | 146 | 149 | 137 |
| **Reißdehnung** | % | 2,6 | 2,7 | 2,7 | 2,1 | 1,9 | 1,6 |
| **E-Modul** | N/mm² | 7330 | 7547 | 7545 | 12500 | 12860 | 12965 |
| **UL94V in 1,5 mm** | | | | | | | |
| **(48h, 23°C)** | | V0 | V1 | V1 | V1 | V1 | V1 |
| **(7d, 70°C)** | | V1 | V1 | V1 | V1 | V1 | V1 |
| **Gesamtbewertung** | | V1 | V1 | V1 | V1 | V1 | V1 |

| | | | | | | | |
|---|---|---|---|---|---|---|---|
| n.b.: nicht bestanden | | | | | | | |

Die Einstufung V0 in Beispiel V-3 wird als Ausreißer betrachtet. Die Nachbrennzeit dieses Vergleichsbeispiels lag über der des analogen, aber erfindungsgemäßen Beispiels 9.

**Tabelle 3: Carbonfasern enthaltende Compounds**

| **Rezeptur** | | **V5** | **13** | **14** | **V6** | **15** | **16** |
|---|---|---|---|---|---|---|---|
| **A-1** | Gew.-% | 79,35 | 79,35 | 79,35 | 70 | 70 | 70 |
| **A-2** | Gew.-% | 3,65 | 3,65 | 3,65 | 3,00 | 3,00 | 3,00 |
| **A-3** | Gew.-% | 6,8 | 6,6 | 6,4 | 6,84 | 6,64 | 6,44 |
| **B-4** | Gew.-% | 10 | 10 | 10 | 20 | 20 | 20 |
| **C** | Gew.-% | - | 0,2 | 0,4 | - | 0,2 | 0,4 |
| **E** | Gew.-% | 0,2 | 0,2 | 0,2 | 0,16 | 0,16 | 0,16 |

| **Prüfungen:** | | | | | | | |
|---|---|---|---|---|---|---|---|
| **ηᵣₑₗ Granulat (vom Film)** | | 1,276 | 1,278 | 1,273 | 1,279 | 1,273 | 1,269 |
| **MVR** | cm³/(10 min) | 5,9 | 6,5 | 6,8 | 4,3 | 4,8 | 5,1 |
| **IMVR20'** | cm³/(10 min) | 6,9 | 8,1 | 9,2 | 5,1 | 6,2 | 6,6 |
| **Delta MVR/IMVR20'** | | 1,0 | 1,6 | 2,4 | 0,8 | 1,4 | 1,5 |

| **Schmelzevisk. bei 280°C** | | | | | | | |
|---|---|---|---|---|---|---|---|
| **eta 50** | Pa·s | 1249 | 997 | 926 | 1067 | 1221 | 1137 |
| **eta 100** | Pa·s | 1074 | 884 | 835 | 948 | 1102 | 962 |
| **eta 200** | Pa·s | 905 | 769 | 726 | 828 | 891 | 807 |
| **eta 500** | Pa·s | 672 | 585 | 562 | 622 | 630 | 584 |
| **eta 1000** | Pa·s | 497 | 449 | 432 | 488 | 468 | 448 |
| **eta 1500** | Pa·s | 398 | 367 | 353 | 410 | 382 | 366 |
| **eta 5000** | Pa·s | 197 | 168 | 162 | 202 | 176 | 169 |

| **Schmelzevisk. bei 300°C** | | | | | | | |
|---|---|---|---|---|---|---|---|
| **eta 50** | Pa·s | 772 | 525 | 479 | 632 | 688 | 590 |
| **eta 100** | Pa·s | 667 | 491 | 449 | 583 | 653 | 533 |
| **eta 200** | Pa·s | 572 | 449 | 404 | 519 | 562 | 474 |
| **eta 500** | Pa·s | 438 | 361 | 330 | 406 | 425 | 371 |
| **eta 1000** | Pa·s | 339 | 284 | 258 | 306 | 317 | 283 |
| **eta 1500** | Pa·s | 283 | 240 | 218 | 260 | 263 | 235 |
| **eta 5000** | Pa·s | 139 | 123 | 114 | 136 | 135 | 124 |

| **Schmelzevisk. bei 320°C** | | | | | | | |
|---|---|---|---|---|---|---|---|
| **eta 50** | Pa·s | 398 | 251 | 267 | 326 | 372 | 312 |
| **eta 100** | Pa·s | 358 | 246 | 260 | 309 | 358 | 295 |
| **eta 200** | Pa·s | 319 | 239 | 246 | 291 | 326 | 270 |
| **eta 500** | Pa·s | 250 | 205 | 205 | 244 | 264 | 223 |
| **eta 1000** | Pa·s | 202 | 172 | 169 | 199 | 212 | 183 |
| **eta 1500** | Pa·s | 173 | 147 | 146 | 173 | 181 | 158 |
| **eta 5000** | Pa·s | 97 | 85 | 87 | 99 | 101 | 90 |
| **Zugversuch** | | | | | | | |
| **Streckspannung** | N/mm² | 113 | 113 | 114 | 144 | 146 | n. g. |
| **Streckdehnung** | % | 3,4 | 3,4 | 3,3 | 2,7 | 2,7 | n. g. |
| **Reißfestigkeit** | N/mm² | 111 | 112 | 112 | 143 | 145 | 147 |
| **Reißdehnung** | % | 3,8 | 3,9 | 3,7 | 2,5 | 2,5 | 2,3 |
| **E-Modul** | N/mm² | 7504 | 7445 | 7527 | 12390 | 12764 | 13012 |

| **UL94V in 1,5 mm** | | | | | | | |
|---|---|---|---|---|---|---|---|
| **(48h, 23°C)** | | V0 | V1 | V0 | V1 | V0 | V1 |
| **(7d, 70°C)** | | V0 | V0 | V0 | V1 | V0 | V0 |
| **Gesamtbewertung** | | V0 | V1 | V0 | V1 | V0 | V1 |

| | | | | | | | |
|---|---|---|---|---|---|---|---|
| n.g.: nicht gemessen | | | | | | | |

**Tabelle 4: Carbonfasern enthaltende Compounds**

| **Rezeptur** | | **V7** | **17** | **18** | **V8** | **19** | **20** |
|---|---|---|---|---|---|---|---|
| **A-1** | Gew.-% | 79,35 | 79,35 | 79,35 | 70 | 70 | 70 |
| **A-2** | Gew.-% | 3,65 | 3,65 | 3,65 | 3,00 | 3,00 | 3,00 |
| **A-3** | Gew.-% | 6,8 | 6,6 | 6,4 | 6,84 | 6,64 | 6,44 |
| **B-5** | Gew.-% | 10 | 10 | 10 | 20 | 20 | 20 |
| **C** | Gew.-% | - | 0,2 | 0,4 | - | 0,2 | 0,4 |
| **E** | Gew.-% | 0,2 | 0,2 | 0,2 | 0,16 | 0,16 | 0,16 |

| **Prüfungen:** | | | | | | | |
|---|---|---|---|---|---|---|---|
| **ηᵣₑₗ Granulat (vom Film)** | | 1,275 | 1,273 | 1,272 | 1,270 | 1,267 | 1,264 |
| **MVR** | cm³/(10 min) | 6,1 | 7,1 | 8,4 | 3,4 | 4,3 | 4,6 |
| **IMVR20'** | cm³/(10 min) | 6,1 | 8,7 | 10,9 | 4,0 | 6,5 | 7,4 |
| **Delta MVR/IMVR20'** | | 0,0 | 1,6 | 2,5 | 0,6 | 2,2 | 2,8 |

| **Schmelzevisk. bei 280°C** | | | | | | | |
|---|---|---|---|---|---|---|---|
| **eta 50** | Pa·s | 1123 | 702 | 941 | 1207 | 1067 | 856 |
| **eta 100** | Pa·s | 990 | 667 | 828 | 1074 | 934 | 779 |
| **eta 200** | Pa·s | 839 | 600 | 688 | 905 | 793 | 691 |
| **eta 500** | Pa·s | 633 | 484 | 522 | 661 | 571 | 525 |
| **eta 1000** | Pa·s | 478 | 380 | 403 | 482 | 435 | 407 |
| **eta 1500** | Pa·s | 388 | 318 | 334 | 377 | 351 | 338 |
| **eta 5000** | Pa·s | 178 | 153 | 158 | 183 | 165 | 162 |

| **Schmelzevisk. bei 300°C** | | | | | | | |
|---|---|---|---|---|---|---|---|
| **eta 50** | Pa·s | 624 | 323 | 365 | 702 | 421 | 267 |
| **eta 100** | Pa·s | 540 | 309 | 351 | 618 | 421 | 263 |
| **eta 200** | Pa·s | 474 | 288 | 319 | 526 | 368 | 260 |
| **eta 500** | Pa·s | 379 | 233 | 261 | 404 | 293 | 233 |
| **eta 1000** | Pa·s | 293 | 200 | 213 | 313 | 235 | 193 |
| **eta 1500** | Pa·s | 247 | 178 | 183 | 267 | 199 | 176 |
| **eta 5000** | Pa·s | 131 | 101 | 105 | 142 | 118 | 102 |

| **Schmelzevisk. bei 320°C** | | | | | | | |
|---|---|---|---|---|---|---|---|
| **eta 50** | Pa·s | 379 | 191 | 211 | 407 | 275 | 135 |
| **eta 100** | Pa·s | 337 | 175 | 204 | 372 | 253 | 133 |
| **eta 200** | Pa·s | 291 | 158 | 186 | 312 | 218 | 127 |
| **eta 500** | Pa·s | 236 | 146 | 156 | 236 | 168 | 120 |
| **eta 1000** | Pa·s | 194 | 126 | 129 | 188 | 138 | 103 |
| **eta 1500** | Pa·s | 169 | 116 | 116 | 163 | 120 | 94 |
| **eta 5000** | Pa·s | 102 | 76 | 73 | 98 | 75 | 60 |

| **Zugversuch** | | | | | | | |
|---|---|---|---|---|---|---|---|
| **Streckspannung** | N/mm² | - | - | - | - | - | - |
| **Streckdehnung** | % | - | - | - | - | - | - |
| **Reißfestigkeit** | N/mm² | 106 | 105 | 106 | 128 | 133 | 132 |
| **Reißdehnung** | % | 2,5 | 2,5 | 2,5 | 1,4 | 1,4 | 1,4 |
| **E-Modul** | N/mm² | 7508 | 7495 | 7495 | 13056 | 13542 | 13648 |

| **UL94V in 1,5 mm** | | | | | | | |
|---|---|---|---|---|---|---|---|
| **(48h, 23°C)** | | V0 | V0 | V1 | V0 | V1 | V0 |
| **(7d, 70°C)** | | V1 | V0 | V0 | V0 | V0 | V0 |
| **Gesamtbewertung** | | V1 | V0 | V1 | V0 | V1 | V0 |

**Tabelle 5: Glasfasern enthaltende Compounds ohne Flammschutzmittel**

| **Rezeptur** | | **V9** | **21** | **22** | **23** | **24** | **V10** | **25** | **26** | **27** | **28** |
|---|---|---|---|---|---|---|---|---|---|---|---|
| **A-1** | Gew.-% | 79,35 | 79,35 | 79,35 | 79,35 | 79,35 | 70,00 | 70,00 | 70,00 | 70,00 | 70,00 |
| **A-2** | Gew.-% | 3,65 | 3,65 | 3,65 | 3,65 | 3,65 | 3,00 | 3,00 | 3,00 | 3,00 | 3,00 |
| **A-3** | Gew.-% | 7,00 | 6,80 | 6,60 | 6,40 | 6,20 | 7,00 | 6,80 | 6,60 | 6,40 | 6,20 |
| **B-1** | Gew.-% | 10,00 | 10,00 | 10,00 | 10,00 | 10,00 | | | | | |
| **B-2** | Gew.-% | | | | | | 20,00 | 20,00 | 20,00 | 20,00 | 20,00 |
| **C** | Gew.-% | | 0,20 | 0,40 | 0,60 | 0,80 | | 0,20 | 0,40 | 0,60 | 0,80 |

| **Prüfungen:** | | | | | | | | | | | |
|---|---|---|---|---|---|---|---|---|---|---|---|
| **MVR** | cm³/(10 min) | 5,5 | 5,8 | 6,1 | 6,5 | 6,6 | 4,7 | 5,0 | 5,3 | 5,5 | 6,0 |
| **IMVR20'** | cm³/(10 min) | 5,6 | 6,3 | 6,8 | 7,3 | 8,0 | 5,1 | 5,6 | 6,0 | 6,7 | 7,1 |
| **Delta MVR/IMVR20'** | | 0,1 | 0,5 | 0,7 | 0,8 | 1,4 | 0,4 | 0,6 | 0,7 | 1,2 | 1,1 |
| **Vicat VST B50** | °C | 146,8 | 144,6 | 143,6 | 141,5 | 139,7 | 149,9 | 148,1 | 145,7 | 144,5 | 142,7 |

| **Schmelzevisk. bei 280°C** | | | | | | | | | | | |
|---|---|---|---|---|---|---|---|---|---|---|---|
| **eta 50** | Pa·s | 1439 | 1365 | 1330 | 1307 | 1254 | 1533 | 1737 | 1580 | 1565 | 1422 |
| **eta 100** | Pa·s | 1230 | 1152 | 1133 | 1124 | 1065 | 1313 | 1365 | 1264 | 1296 | 1173 |
| **eta 200** | Pa·s | 1036 | 972 | 948 | 937 | 892 | 1104 | 1108 | 1024 | 1012 | 963 |
| **eta 500** | Pa·s | 784 | 730 | 706 | 703 | 675 | 802 | 762 | 713 | 734 | 693 |
| **eta 1000** | Pa·s | 570 | 526 | 514 | 514 | 487 | 578 | 554 | 522 | 540 | 517 |
| **eta 1500** | Pa·s | 445 | 415 | 403 | 401 | 387 | 455 | 435 | 420 | 427 | 415 |
| **eta 5000** | Pa·s | 196 | 182 | 177 | 176 | 174 | 220 | 189 | 180 | 189 | 200 |

| **Schmelzevisk. bei 300°C** | | | | | | | | | | | |
|---|---|---|---|---|---|---|---|---|---|---|---|
| **eta 50** | Pa·s | 944 | 818 | 748 | 764 | 748 | 940 | 992 | 957 | 982 | 968 |
| **eta 100** | Pa·s | 754 | 721 | 705 | 673 | 657 | 741 | 781 | 758 | 772 | 708 |
| **eta 200** | Pa·s | 636 | 610 | 599 | 560 | 554 | 615 | 626 | 595 | 608 | 571 |
| **eta 500** | Pa·s | 488 | 476 | 464 | 438 | 431 | 472 | 463 | 445 | 452 | 430 |
| **eta 1000** | Pa·s | 383 | 374 | 366 | 349 | 339 | 363 | 346 | 335 | 336 | 325 |
| **eta 1500** | Pa·s | 317 | 315 | 300 | 284 | 280 | 306 | 288 | 277 | 280 | 271 |
| **eta 5000** | Pa·s | 149 | 149 | 143 | 139 | 137 | 150 | 140 | 139 | 139 | 136 |

| **Schmelzevisk. bei 320°C** | | | | | | | | | | | |
|---|---|---|---|---|---|---|---|---|---|---|---|
| **eta 50** | Pa·s | 543 | 542 | 457 | 515 | 529 | 615 | 596 | 580 | 605 | 600 |
| **eta 100** | Pa·s | 465 | 451 | 444 | 431 | 443 | 525 | 517 | 519 | 523 | 461 |
| **eta 200** | Pa·s | 391 | 392 | 377 | 364 | 364 | 403 | 401 | 394 | 394 | 344 |
| **eta 500** | Pa·s | 308 | 310 | 301 | 286 | 288 | 304 | 294 | 299 | 288 | 250 |
| **eta 1000** | Pa·s | 249 | 254 | 245 | 235 | 236 | 240 | 231 | 238 | 228 | 206 |
| **eta 1500** | Pa·s | 218 | 217 | 209 | 200 | 204 | 202 | 195 | 202 | 191 | 176 |
| **eta 5000** | Pa·s | 116 | 114 | 111 | 108 | 110 | 111 | 109 | 112 | 107 | 99 |

| **Zugversuch** | | | | | | | | | | | |
|---|---|---|---|---|---|---|---|---|---|---|---|
| **Streckspannung** | N/mm² | 60,4 | 61,6 | 61,8 | 62 | 62,2 | 95,3 | n.b. | n.b. | n.b. | n.b. |
| **Streckdehnung** | % | 5,1 | 5 | 5,1 | 5 | 5 | 3,1 | n.b. | n.b. | n.b. | n.b. |
| **Zugfestigkeit** | N/mm² | 60,4 | 61,6 | 61,8 | 62 | 62,2 | 94,7 | 93,4 | 96,2 | 95,5 | 97,6 |
| **Bruchspannung** | N/mm² | 45,4 | 45,4 | 45,6 | 44,7 | 45 | 94,2 | 93,3 | 96,1 | 95,5 | 97,3 |
| **Bruchdehnung** | % | 27,2 | 22,6 | 26,4 | 27,2 | 18,5 | 3 | 2,8 | 2,8 | 2,7 | 2,7 |
| **nominelle Bruchdehnung** | % | 14,9 | 12,9 | 14,5 | 14,8 | 10,8 | 3,5 | 3,3 | 3,4 | 3,3 | 3,3 |
| **E-Modul** | N/mm² | 3604 | 3674 | 3625 | 3675 | 3663 | 5440 | 5431 | 5576 | 5518 | 5698 |

**Tabelle 6: Carbonfasern enthaltende Compounds ohne Flammschutzmittel**

| **Rezeptur** | | **V11** | **29** | **30** | **V12** | **31** | **32** |
|---|---|---|---|---|---|---|---|
| **A-1** | Gew.-% | 79,35 | 79,35 | 79,35 | 70,00 | 70,00 | 70,00 |
| **A-2** | Gew.-% | 3,65 | 3,65 | 3,65 | 3,00 | 3,00 | 3,00 |
| **A-3** | Gew.-% | 7,00 | 6,80 | 6,60 | 7,00 | 6,80 | 6,60 |
| **B-3** | Gew.-% | 10,00 | 10,00 | 10,00 | 20,00 | 20,00 | 20,00 |
| **C** | Gew.-% | | 0,20 | 0,40 | | 0,20 | 0,40 |

| **Prüfungen:** | | | | | | | |
|---|---|---|---|---|---|---|---|
| **MVR** | cm³/(10 min) | 5,6 | 5,7 | 6,1 | 4,6 | 4,9 | 5,2 |
| **IMVR20'** | cm³/(10 min) | 5,7 | 6,5 | 6,9 | 5,4 | 6,0 | 6,4 |
| **Delta MVR/IMVR20'** | | 0,1 | 0,8 | 0,8 | 0,8 | 1,1 | 1,2 |
| **Vicat VST B50** | °C | 149,6 | 147,5 | 146,4 | 149,4 | 147,9 | 146,2 |

| **Schmelzevisk. bei 280°C** | | | | | | | |
|---|---|---|---|---|---|---|---|
| **eta 50** | Pa·s | 1241 | 1210 | 1150 | 1382 | 1388 | 1308 |
| **eta 100** | Pa·s | 1093 | 1069 | 1024 | 1198 | 1204 | 1135 |
| **eta 200** | Pa·s | 940 | 916 | 876 | 1014 | 1008 | 956 |
| **eta 500** | Pa·s | 694 | 682 | 652 | 720 | 729 | 695 |
| **eta 1000** | Pa·s | 517 | 508 | 491 | 524 | 527 | 505 |
| **eta 1500** | Pa·s | 417 | 407 | 394 | 419 | 422 | 407 |
| **eta 5000** | Pa·s | 181 | 179 | 175 | 190 | 200 | 195 |

| **Schmelzevisk. bei 300°C** | | | | | | | |
|---|---|---|---|---|---|---|---|
| **eta 50** | Pa·s | 662 | 648 | 636 | 734 | 764 | 714 |
| **eta 100** | Pa·s | 605 | 588 | 577 | 699 | 669 | 638 |
| **eta 200** | Pa·s | 535 | 523 | 513 | 609 | 576 | 559 |
| **eta 500** | Pa·s | 419 | 407 | 409 | 470 | 454 | 435 |
| **eta 1000** | Pa·s | 331 | 320 | 317 | 350 | 348 | 339 |
| **eta 1500** | Pa·s | 281 | 274 | 269 | 290 | 288 | 282 |
| **eta 5000** | Pa·s | 148 | 135 | 138 | 147 | 144 | 148 |

| **Schmelzevisk. bei 320°C** | | | | | | | |
|---|---|---|---|---|---|---|---|
| **eta 50** | Pa·s | 333 | 390 | 349 | 352 | 391 | 354 |
| **eta 100** | Pa·s | 296 | 350 | 302 | 305 | 348 | 308 |
| **eta 200** | Pa·s | 272 | 319 | 288 | 292 | 314 | 286 |
| **eta 500** | Pa·s | 230 | 266 | 242 | 241 | 255 | 240 |
| **eta 1000** | Pa·s | 191 | 218 | 200 | 204 | 209 | 197 |
| **eta 1500** | Pa·s | 166 | 188 | 171 | 185 | 183 | 175 |
| **eta 5000** | Pa·s | 100 | 110 | 99 | 95 | 104 | 100 |

| **Zugversuch** | | | | | | | |
|---|---|---|---|---|---|---|---|
| **Zugfestigkeit** | N/mm² | 98,7 | 102,1 | 99,6 | 127,6 | 125,9 | 127,2 |
| **Bruchspannung** | N/mm² | 98,6 | 101,8 | 99,6 | 127,1 | 125,8 | 127,2 |
| **Bruchdehnung** | % | 2,1 | 2,1 | 2 | 1,6 | 1,4 | 1,5 |
| **nominelle Bruchdehnung** | % | 2,5 | 2,5 | 2,3 | 2,1 | 2 | 2 |
| **E-Modul** | N/mm² | 6979 | 7252 | 7220 | 12303 | 12551 | 12488 |

**Tabelle 7: Carbonfasern enthaltende Compounds ohne Flammschutzmittel**

| **Rezeptur** | | **V13** | **33** | **34** | **V14** | **35** | **36** |
|---|---|---|---|---|---|---|---|
| **A-1** | Gew.-% | 79,35 | 79,35 | 79,3 | 70,00 | 70,00 | 70,00 |
| **A-2** | Gew.-% | 3,65 | 3,65 | 3,65 | 3,00 | 3,00 | 3,00 |
| **A-3** | Gew.-% | 7,00 | 6,80 | 6,60 | 7,00 | 6,80 | 6,60 |
| **B-4** | Gew.-% | 10,00 | 10,00 | 10,00 | 20,00 | 20,00 | 20,00 |
| **C** | Gew.-% | | 0,20 | 0,40 | | 0,20 | 0,40 |

| **Prüfungen:** | | | | | | | |
|---|---|---|---|---|---|---|---|
| **MVR** | cm³/(10 min) | 5,5 | 5,6 | 5,7 | 3,8 | 4,3 | 4,5 |
| **IMVR20'** | cm³/(10 min) | 5,6 | 6,1 | 6,4 | 4,4 | 4,9 | 5,3 |
| **Delta MVR/IMVR20'** | | 0,1 | 0,5 | 0,7 | 0,6 | 0,6 | 0,8 |
| **Vicat VST B50** | °C | 150,8 | 148,3 | 147,1 | 151,7 | 149,1 | 147,5 |

| **Schmelzevisk. bei 280°C** | | | | | | | |
|---|---|---|---|---|---|---|---|
| **eta 50** | Pa·s | 1270 | 1249 | 1213 | 1572 | 1512 | 1469 |
| **eta 100** | Pa·s | 1138 | 1125 | 1078 | 1345 | 1326 | 1268 |
| **eta 200** | Pa·s | 977 | 956 | 927 | 1131 | 1124 | 1068 |
| **eta 500** | Pa·s | 732 | 720 | 692 | 809 | 807 | 762 |
| **eta 1000** | Pa·s | 537 | 532 | 509 | 576 | 576 | 543 |
| **eta 1500** | Pa·s | 427 | 421 | 404 | 456 | 454 | 429 |
| **eta 5000** | Pa·s | 188 | 185 | 178 | 197 | 196 | 188 |

| **Schmelzevisk. bei 300°C** | | | | | | | |
|---|---|---|---|---|---|---|---|
| **eta 50** | Pa·s | 741 | 612 | 714 | 936 | 855 | 782 |
| **eta 100** | Pa·s | 686 | 619 | 635 | 824 | 762 | 698 |
| **eta 200** | Pa·s | 609 | 546 | 564 | 711 | 662 | 613 |
| **eta 500** | Pa·s | 478 | 433 | 446 | 540 | 510 | 482 |
| **eta 1000** | Pa·s | 377 | 340 | 349 | 408 | 384 | 367 |
| **eta 1500** | Pa·s | 315 | 286 | 293 | 335 | 317 | 304 |
| **eta 5000** | Pa·s | 154 | 141 | 144 | 164 | 155 | 150 |

| **Schmelzevisk. bei 320°C** | | | | | | | |
|---|---|---|---|---|---|---|---|
| **eta 50** | Pa·s | 397 | 417 | 448 | 557 | 537 | 485 |
| **eta 100** | Pa·s | 363 | 374 | 409 | 499 | 466 | 432 |
| **eta 200** | Pa·s | 335 | 338 | 358 | 433 | 416 | 384 |
| **eta 500** | Pa·s | 285 | 286 | 291 | 346 | 332 | 312 |
| **eta 1000** | Pa·s | 238 | 232 | 238 | 275 | 269 | 249 |
| **eta 1500** | Pa·s | 206 | 195 | 206 | 235 | 228 | 213 |
| **eta 5000** | Pa·s | 100 | 100 | 114 | 123 | 110 | 115 |

| **Zugversuch** | | | | | | | |
|---|---|---|---|---|---|---|---|
| **Streckspannung** | N/mm² | 104 | 104,9 | 106 | n.b. | n.b. | n.b. |
| **Streckdehnung** | % | 3,2 | 3,2 | 3,1 | n.b | n.b. | n.b |
| **Zugfestigkeit** | N/mm² | 104 | 104,9 | 106 | 136,3 | 134,8 | 136,2 |
| **Bruchspannung** | N/mm² | 102,9 | 103,9 | 105,1 | 135,8 | 134,8 | 135,5 |
| **Bruchdehnung** | % | 3,6 | 3,5 | 3,4 | 2,2 | 2 | 2 |
| **nominelle Bruchdehnung** | % | 3,5 | 3,5 | 3,4 | 2,6 | 2,5 | 2,5 |
| **E-Modul** | N/mm² | 6897 | 6790 | 6949 | 12217 | 12384 | 12396 |

| | | | | | | | |
|---|---|---|---|---|---|---|---|
| n.b.: nicht bestimmt | | | | | | | |

**Tabelle 8: Glasfasern enthaltende Compounds ohne Flammschutzmittel**

| **Rezeptur** | | **V15** | **37** | **38** | **39** |
|---|---|---|---|---|---|
| **A-1** | Gew.-% | 59,35 | 59,35 | 59,35 | 59,35 |
| **A-2** | Gew.-% | 3,65 | 3,65 | 3,65 | 3,65 |
| **A-3** | Gew.-% | 7,00 | 6,80 | 6,60 | 6,40 |
| **B-1** | Gew.-% | 30,00 | 30,00 | 30,00 | 30,00 |
| **C** | Gew.-% | | 0,20 | 0,40 | 0,60 |

| **Prüfungen:** | | | | | |
|---|---|---|---|---|---|
| **MVR** | cm³/(10 min) | 3,8 | 4,0 | 4,1 | 4,5 |
| **IMVR20'** | cm³/(10 min) | 3,9 | 4,1 | 4,3 | 4,7 |
| **Delta MVR/IMVR20'** | | 0,1 | 0,1 | 0,2 | 0,2 |
| **Vicat VST B50** | °C | 148,9 | 146,6 | 145,2 | 144 |

| **Schmelzevisk. bei 280°C** | | | | | |
|---|---|---|---|---|---|
| **eta 100** | Pa·s | 1543 | 1541 | 1533 | 1442 |
| **eta 200** | Pa·s | 1265 | 1269 | 1248 | 1173 |
| **eta 500** | Pa·s | 900 | 904 | 892 | 805 |
| **eta 1000** | Pa·s | 626 | 616 | 598 | 572 |
| **eta 1500** | Pa·s | 488 | 490 | 473 | 457 |
| **eta 5000** | Pa·s | 208 | 207 | 210 | 199 |

| **Schmelzevisk. bei 300°C** | | | | | |
|---|---|---|---|---|---|
| **eta 50** | Pa·s | 1088 | 1040 | 1028 | 1069 |
| **eta 100** | Pa s | 915 | 860 | 849 | 858 |
| **eta 200** | Pa·s | 764 | 717 | 711 | 691 |
| **eta 500** | Pa·s | 571 | 537 | 532 | 517 |
| **eta 1000** | Pa·s | 439 | 402 | 399 | 397 |
| **eta 1500** | Pa·s | 353 | 319 | 321 | 313 |
| **eta 5000** | Pa·s | 170 | 160 | 158 | 156 |

| **Zugversuch** | | | | | |
|---|---|---|---|---|---|
| **Streckspannung** | N/mm² | 62,6 | 63,2 | 63 | 62,2 |
| **Streckdehnung** | % | 2,2 | 2,7 | 2,7 | 3,0 |
| **Zugfestigkeit** | N/mm² | 62,6 | 63,2 | 63 | 62,2 |
| **Bruchspannung** | N/mm² | 61,3 | 62 | 61,9 | 60,8 |
| **Bruchdehnung** | % | 2,3 | 2,8 | 2,9 | 3,2 |
| **nominelle Bruchdehnung** | % | 2,6 | 3,1 | 3,0 | 3,3 |
| **E-Modul** | N/mm² | 8015 | 8137 | 8189 | 7947 |

**Tabelle 9: Glasfasern enthaltende Compounds ohne Flammschutzmittel**

| **Rezeptur** | | **V16** | **40** | **41** |
|---|---|---|---|---|
| **A-1** | Gew.-% | 49,35 | 49,35 | 49,35 |
| **A-2** | Gew.-% | 3,65 | 3,65 | 3,65 |
| **A-3** | Gew.-% | 7,00 | 6,80 | 6,60 |
| **B-1** | Gew.-% | 40,00 | 40,00 | 40,00 |

| **C** | Gew.-% | | 0,20 | 0,40 |
|---|---|---|---|---|
| **Prüfungen:** | | | | |
| **MVR** | cm³/(10 min) | 2,7 | 3,3 | 3,1 |
| **IMVR20'** | cm³/(10 min) | 2,9 | 3,4 | 2,9 |
| **Delta MVR/IMVR20'** | | 0,2 | 0,1 | -0,2⁵ |
| **Vicat VST B50** | °C | 148,1 | 146 | 144,3 |

| **Schmelzevisk. bei 280°C** | | | | |
|---|---|---|---|---|
| **eta 50** | Pa·s | 2178 | 2069 | 2023 |
| **eta 100** | Pa·s | 1776 | 1674 | 1621 |
| **eta 200** | Pa·s | 1441 | 1335 | 1321 |
| **eta 500** | Pa·s | 997 | 940 | 921 |
| **eta 1000** | Pa·s | 661 | 620 | 612 |
| **eta 1500** | Pa·s | 525 | 486 | 476 |
| **eta 5000** | Pa·s | 223 | 211 | 207 |

| **Zugversuch** | | | | |
|---|---|---|---|---|
| **Streckspannung** | N/mm² | 0 | 58,7 | 58,6 |
| **Streckdehnung** | % | 0 | 1,3 | 1,2 |
| **Zugfestigkeit** | N/mm² | 62,3 | 58,3 | 58,9 |
| **Bruchspannung** | N/mm² | 61,6 | 57,3 | 57,9 |
| **Bruchdehnung** | % | 1,0 | 1,2 | 1,2 |
| **nominelle Bruchdehnung** | % | 1,5 | 1,7 | 1,6 |
| **E-Modul** | N/mm² | 10372 | 10276 | 10349 |

**Tabelle 10: Carbonfasern enthaltende Compounds ohne Flammschutzmittel**

| **Rezeptur** | | **V17** | **42** | **43** |
|---|---|---|---|---|
| **A-1** | Gew.-% | 59,35 | 59,35 | 59,35 |
| **A-2** | Gew.-% | 3,65 | 3,65 | 3,65 |
| **A-3** | Gew.-% | 7,00 | 6,80 | 6,60 |
| **B-3** | Gew.-% | 30,00 | 30,00 | 30,00 |
| **C** | Gew.-% | | 0,20 | 0,40 |

| **Prüfungen:** | | | | |
|---|---|---|---|---|
| **MVR** | cm³/(10 min) | 5,6 | 6,0 | 6,3 |
| **IMVR20'** | cm³/(10 min) | 7,1 | 7,7 | 8,6 |
| **Delta MVR/IMVR20'** | | 1,5 | 1,7 | 2,3 |
| **Vicat VST B50** | °C | 148,9 | 147,1 | 145,7 |

| **Schmelzevisk. bei 280°C** | | | | |
|---|---|---|---|---|
| **eta 50** | Pa·s | 1525 | 1450 | 1345 |
| **eta 100** | Pa·s | 1279 | 1218 | 1168 |
| **eta 200** | Pa·s | 1065 | 1014 | 975 |
| **eta 500** | Pa·s | 785 | 746 | 718 |
| **eta 1000** | Pa·s | 551 | 535 | 511 |
| **eta 1500** | Pa·s | 433 | 419 | 406 |
| **eta 5000** | Pa·s | 200 | 185 | 181 |

| **Schmelzevisk. bei 300°C** | | | | |
|---|---|---|---|---|
| **eta 50** | Pa·s | 731 | 714 | 684 |
| **eta 100** | Pa·s | 646 | 628 | 613 |
| **eta 200** | Pa·s | 552 | 530 | 521 |
| **eta 500** | Pa·s | 428 | 410 | 401 |
| **eta 1000** | Pa·s | 337 | 323 | 314 |
| **eta 1500** | Pa·s | 281 | 268 | 264 |
| **eta 5000** | Pa·s | 139 | 136 | 133 |

| **Zugversuch** | | | | |
|---|---|---|---|---|
| **Streckspannung** | N/mm² | n. b. | n. b. | n. b. |
| **Streckdehnung** | % | n. b. | n. b. | n. b. |
| **Zugfestigkeit** | N/mm² | 140,4 | 147,2 | 145,3 |
| **Bruchspannung** | N/mm² | 140,4 | 146,8 | 145,3 |
| **Bruchdehnung** | % | 1,2 | 1,3 | 1,2 |
| **nominelle Bruchdehnung** | % | 2,2 | 2,3 | 2,3 |
| **E-Modul** | N/mm² | 17765 | 17699 | 18174 |

## Patentansprüche

1. Thermoplastische Zusammensetzung, enthaltend
A) 50,0 Gew.-% bis 91,95 Gew.-% aromatisches Polycarbonat,
B) 8 bis 49,95 Gew.-% Carbonfasern,
C) 0,05 Gew.-% bis 10,0 Gew.-% epoxidiertes Triacylglycerol.

2. Thermoplastische Zusammensetzung nach Anspruch 1, wobei die Zusammensetzung
A) 77,0 Gew.-% bis 91,5 Gew.-% aromatisches Polycarbonat,
B) 8 bis 22 Gew.-% Carbonfasern,
C) 0,2 bis 1,0 Gew.-% epoxidiertes Triacylglycerol,
D) 0,005 bis 0,5 Gew.-% Thermostabilisator und
E) 0,1 bis 3 Gew.-% weitere Additive
enthält.

3. Thermoplastische Zusammensetzung nach Anspruch 2, wobei die Zusammensetzung als weiteres Additiv mindestens ein Alkali-, Erdalkali- und/oder Ammoniumsalz eines aliphatischen oder aromatischen Sulfonsäure-, Sulfonamid- oder Sulfonimidderivates enthält.

4. Thermoplastische Zusammensetzung nach einem der vorhergehenden Ansprüche, wobei als weiteres Additiv 0,1 bis 0,5 Gew.-% Kaliumperfluor-1-butansulfonat enthalten sind.

5. Thermoplastische Zusammensetzung nach einem der vorhergehenden Ansprüche, wobei die Menge an epoxidiertem Triacylglycerol in der Zusammensetzung ≤ 0,8 Gew.-% beträgt.

6. Thermoplastische Zusammensetzung nach einem der vorhergehenden Ansprüche, wobei als aromatisches Polycarbonat Bisphenol A-basiertes Polycarbonat enthalten ist.

7. Thermoplastische Zusammensetzung nach einem der vorhergehenden Ansprüche, wobei das epoxidierte Triacylglycerol eine Mischung von Triestern aus Glycerin mit Ölsäure, Linolsäure, Linolensäure, Palmitinsäure und/oder Stearinsäure enthält.

8. Thermoplastische Zusammensetzung nach einem der vorhergehenden Ansprüche, wobei als aromatisches Polycarbonat ausschließlich aromatisches Homopolycarbonat enthalten ist.

9. Thermoplastische Zusammensetzung nach einem der vorhergehenden Ansprüche, wobei mindestens 90 Gew.-% der C=C-Doppelbindungen aus den Carbonsäureanteilen der Triacylglycerole vollständig epoxidiert sind.

10. Thermoplastische Zusammensetzung nach einem der vorhergehenden Ansprüche, wobei die Komponente C durch die Zumischung von epoxidiertem Sojabohnenöl (CAS-Nummer 8013-07-8) in die thermoplastische Zusammensetzung gelangt.

11. Thermoplastische Zusammensetzung nach Anspruch 10, wobei die Säurezahl des epoxidierten Sojabohnenöls ≤ 0,5 mg KOH/g, bestimmt mittels DIN EN ISO 2114:2006-11, ist.

12. Thermoplastische Zusammensetzung nach einem der Ansprüche 2 bis 11, wobei die Additive ausgewählt sind aus der Gruppe der Antioxidantien, Entformungsmittel, Flammschutzmittel, UV-Absorber, IR-Absorber, Schlagzähmodifikatoren, Antistatika, optischen Aufheller, von Komponente B verschiedenen Füllstoffen, Lichtstreumittel, Farbmittel wie organische Pigmente, anorganische Pigmente und/oder Additiven zur Lasermarkierung und die Zusammensetzung keine weiteren Komponenten als die genannten enthält.

13. Thermoplastische Zusammensetzung nach einem der vorhergehenden Ansprüche, wobei die Zusammensetzung aus
A) 77,0 Gew.-% bis 91,5 Gew.-% aromatischem Polycarbonat,
B) 8 bis 22 Gew.-% Carbonfasern,
C1) 0,2 bis 1,0 Gew.-% epoxidiertem Sojabohnenöl, enthaltend epoxidierte Triacylglycerole,
D) 0,005 bis 0,5 Gew.-% Thermostabilisator und
E) 0,1 bis 3 Gew.-% weiteren Additiven, ausgewählt aus der Gruppe, bestehend aus Antioxidantien, Entformungsmitteln, Flammschutzmitteln, UV-Absorbern, IR-Absorbern, Schlagzähmodifikatoren, Antistatika, optischen Aufhellern, Lichtstreumitteln, Farbmitteln, einschließlich anorganischen Pigmenten, und/oder Additiven zur Lasermarkierung,
besteht.

14. Formteil bestehend aus oder umfassend eine/r thermoplastischen Zusammensetzung gemäß einem der vorhergehenden Ansprüche.

15. Verwendung von epoxidiertem Triacylglycerol, insbesondere in Form von epoxidiertem Sojabohnenöl, zur Verbesserung der Fließfähigkeit von Glasfaser- und/oder Carbonfaser-haltigen thermoplastischen Zusammensetzungen auf Basis von aromatischem Polycarbonat.

## Claims

1. Thermoplastic composition, containing
A) 50.0% by weight to 91.95% by weight of aromatic polycarbonate,
B) 8% to 49.95% by weight of carbon fibres,
C) 0.05% by weight to 10.0% by weight of epoxidized triacylglycerol.

2. Thermoplastic composition according to Claim 1, wherein the composition contains
A) 77.0% by weight to 91.5% by weight of aromatic polycarbonate,
B) 8% to 22% by weight of carbon fibres,
C) 0.2% to 1.0% by weight of epoxidized triacylglycerol,
D) 0.005% to 0.5% by weight of heat stabilizer and
E) 0.1% to 3% by weight of further additives.

3. Thermoplastic composition according to Claim 2, wherein the composition contains, as further additive, at least one alkali metal, alkaline earth metal and/or ammonium salt of an aliphatic or aromatic sulfonic acid, sulfonamide or sulfonimide derivative.

4. Thermoplastic composition according to any of the preceding claims, wherein, as further additive, 0.1% to 0.5% by weight of potassium perfluoro-1-butanesulfonate is present.

5. Thermoplastic composition according to any of the preceding claims, wherein the amount of epoxidized triacylglycerol in the composition is ≤ 0.8% by weight.

6. Thermoplastic composition according to any of the preceding claims, wherein, as aromatic polycarbonate, bisphenol A-based polycarbonate is present.

7. Thermoplastic composition according to any of the preceding claims, wherein the epoxidized triacylglycerol contains a mixture of triesters of glycerol with oleic acid, linoleic acid, linolenic acid, palmitic acid and/or stearic acid.

8. Thermoplastic composition according to any of the preceding claims, wherein, as aromatic polycarbonate, exclusively aromatic homopolycarbonate is present.

9. Thermoplastic composition according to any of the preceding claims, wherein at least 90% by weight of the C=C double bonds from the carboxylic acid moieties of the triacylglycerols have been completely epoxidized.

10. Thermoplastic composition according to any of the preceding claims, wherein component C is introduced into the thermoplastic composition as a result of admixing epoxidized soybean oil (CAS number 8013-07-8).

11. Thermoplastic composition according to Claim 10, wherein the acid number of the epoxidized soybean oil is ≤ 0.5 mg KOH/g, determined by DIN EN ISO 2114:2006-11.

12. Thermoplastic composition according to any of Claims 2 to 11, wherein the additives are selected from the group of the antioxidants, demoulding agents, flame retardants, UV absorbers, IR absorbers, impact modifiers, antistats, optical brighteners, fillers other than component B, light-scattering agents, colorants such as organic pigments, inorganic pigments and/or additives for laser marking, and the composition does not contain any further components other than those mentioned.

13. Thermoplastic composition according to any of the preceding claims, wherein the composition consists of
A) 77.0% by weight to 91.5% by weight of aromatic polycarbonate,
B) 8% to 22% by weight of carbon fibres,
C1) 0.2% to 1.0% by weight of epoxidized soybean oil, containing epoxidized triacylglycerols,
D) 0.005% to 0.5% by weight of heat stabilizer and
E) 0.1% to 3% by weight of further additives selected from the group consisting of antioxidants, demoulding agents, flame retardants, UV absorbers, IR absorbers, impact modifiers, antistats, optical brighteners, light-scattering agents, colorants, including inorganic pigments, and/or additives for laser marking.

14. Moulding consisting of or comprising a thermoplastic composition as claimed in any of the preceding claims.

15. Use of epoxidized triacylglycerol, in particular in the form of epoxidized soybean oil, for improving the flowability of glass fibre- and/or carbon fibre-containing thermoplastic compositions based on aromatic polycarbonate.

## Revendications

1. Composition thermoplastique, contenant
A) 50,0 % en poids à 91,95 % en poids de polycarbonate aromatique,
B) 8 à 49,95 % en poids de fibres de carbone,
C) 0,05 % en poids à 10,0 % en poids de triacylglycérol époxydé.

2. Composition thermoplastique selon la revendication 1, la composition contenant
A) 77,0 % en poids à 91,5 % en poids de polycarbonate aromatique,
B) 8 à 22 % en poids de fibres de carbone,
C) 0,2 à 1,0 % en poids de triacylglycérol époxydé,
D) 0,005 à 0,5 % en poids de thermostabilisant et
E) 0,1 à 3 % en poids d'additifs supplémentaires.

3. Composition thermoplastique selon la revendication 2, la composition contenant en tant qu'additif supplémentaire au moins un sel de métal alcalin, de métal alcalino-terreux et/ou d'ammonium d'un dérivé aliphatique ou aromatique d'acide sulfonique, de sulfonamide ou de sulfonimide.

4. Composition thermoplastique selon l'une quelconque des revendications précédentes, dans laquelle est contenu en tant qu'additif supplémentaire 0,1 à 0,5 % en poids de perfluoro-1-butanesulfonate de potassium.

5. Composition thermoplastique selon l'une quelconque des revendications précédentes, dans laquelle la quantité de triacylglycérol époxydé dans la composition est ≤ 0,8 % en poids.

6. Composition thermoplastique selon l'une quelconque des revendications précédentes, dans laquelle est contenu en tant que polycarbonate aromatique du polycarbonate à base de bisphénol A.

7. Composition thermoplastique selon l'une quelconque des revendications précédentes, dans laquelle le triacylglycérol époxydé contient un mélange de triesters de glycérol avec l'acide oléique, l'acide linoléique, l'acide linolénique, l'acide palmitique et/ou l'acide stéarique.

8. Composition thermoplastique selon l'une quelconque des revendications précédentes, dans laquelle en tant que polycarbonate aromatique est exclusivement contenu un homopolycarbonate aromatique.

9. Composition thermoplastique selon l'une quelconque des revendications précédentes, dans laquelle au moins 90 % en poids des doubles liaisons C=C des constituants acide carboxylique des triacylglycérols sont totalement époxydées.

10. Composition thermoplastique selon l'une quelconque des revendications précédentes, dans laquelle le composant C aboutit dans la composition thermoplastique par l'incorporation d'huile de soja époxydée (numéro CAS 8013-07-8).

11. Composition thermoplastique selon la revendication 10, dans laquelle l'indice d'acide de l'huile de soja époxydée est ≤ 0,5 mg de KOH/g, déterminé au moyen de DIN EN ISO 2114:2006-11.

12. Composition thermoplastique selon l'une quelconque des revendications 2 à 11, dans laquelle les additifs sont choisis dans le groupe des antioxydants, agents de démoulage, agents ignifuges, absorbeurs UV, absorbeurs IR, modificateurs de la résistance au choc, agents antistatiques, azurants optiques, charges différentes du composant B, agents de dispersion de la lumière, agents colorants, tels que pigments organiques, pigments inorganiques et/ou additifs destinés au marquage au laser et la composition ne contient pas d'autres composants que ceux cités.

13. Composition thermoplastique selon l'une quelconque des revendications précédentes, la composition étant constituée de
A) 77,0 % en poids à 91,5 % en poids de polycarbonate aromatique,
B) 8 à 22 % en poids de fibres de carbone,
C) 0,2 à 1,0 % en poids d'huile de soja époxydée contenant des triacylglycérols époxydés,
D) 0,005 à 0,5 % en poids de thermostabilisant et
E) 0,1 à 3 % en poids d'additifs supplémentaires choisis dans le groupe constitué par les antioxydants, agents de démoulage, agents ignifuges, absorbeurs UV, absorbeurs IR, modificateurs de la résistance au choc, agents antistatiques, azurants optiques, agents de dispersion de la lumière, agents colorants, y compris pigments inorganiques, et/ou additifs destinés au marquage au laser.

14. Pièce moulée constituée d'une ou comprenant une composition thermoplastique selon l'une quelconque des revendications précédentes.

15. Utilisation de triacylglycérol époxydé, en particulier sous forme d'huile de soja époxydée, pour l'amélioration de la fluidité de compositions thermoplastiques à base de polycarbonate aromatique, contenant des fibres de verre et/ou des fibres de carbone.
